# EUROPEAN PATENT APPLICATION

(11) **EP 2 500 609 A1**
(43) Date of publication of application: **19.09.2012**
(21) Application number: 12159680.3
(22) Date of filing: 15.03.2012
(51) Int. Cl.: F16K 15/03

(54) **Check valve with axial thrust element**

(30) Priority: 17.03.2011 US 201161453815 P; 24.01.2012 US 201213357147
(71) Applicant: Honeywell International, Inc., Morristown, NJ 07962-2245 (US)
(72) Inventor: Tornquist, David Bruce, Morristown, NJ New Jersey 07962-2245 (US); Cronenberg, Stephen, Morristown, NJ New Jersey 07962-2245 (US); Howell, Kelly, Morristown, NJ New Jersey 07962-2245 (US); Tanner, Justin A., Morristown, NJ New Jersey 07962-2245 (US)
(74) Representative: Buckley, Guy Julian

(57) **Abstract**

A split flapper (106) check valve includes one or more additional bushing/bearing surface areas for controlling check valve flapper position along the axis of the hinge pin (104). This is accomplished by adding one or more grounded bushings (126) between the flappers (106). The one or more grounded bushings is/are non-rotationally coupled to the hinge pin (104), and thus grounded to the check valve housing, so that the flappers (106) can bear against this additional surface. The additional bearing area has the effect of increasing the axial bearing surface area according to the number of additional ground lugs that are used, without increasing the diameter of the flapper lugs.

## Description

### PRIORITY CLAIM

This application claims the benefit of U.S. Provisional Application No. 61/453,815, filed March 17, 2011.

### TECHNICAL FIELD

The present invention generally relates to check valves, and more particularly relates to plural element check valves that include one or more axial thrust elements.

### BACKGROUND

Split flapper check valves may be used in any one of numerous circumstances in which air flow may need to be regulated. A typical split flapper check valve includes a valve body having an opening formed therethrough, a shaft that extends across the opening, and two valve plates or flappers rotationally mounted on the shaft via lugs. When airflow impinges on an upstream side of the valve flappers, one or both of the valve flappers unseat from the valve body to allow air to flow through the valve body opening.

Typically, the valve flappers are not highly loaded when the valve is open. As a result, the valve flappers may be vulnerable to motion and wear due to vibration and aerodynamic flutter. This can result in early field issues, warranty costs, and customer dissatisfaction when installations are prone to these issues.

Reducing the wear is dependent on a combination of reducing the relative motion between the parts, reducing the unit loading, or changing the materials to a more favorable wear couple. In many instances, the available options for materials and wear couples are limited and/or have been exhausted. Moreover, the aerodynamic and vibratory loads may not be controllable. In general, reducing the unit loading by increasing the contact surface area is difficult without changing the design substantially. In particular, increasing the contact surface area along the hinge pin axis is problematic because space is very limited.

In most cases, loads along the axis of the shaft are handled by flanged bushings that are installed in the flapper hinge lugs. The bearing area of the bushing flanges is limited by the distance between the hinge pin centerline and the cross bar, which is an integral part of the check valve housing that the flappers rest on and transfer load to when the valve is closed. Due to other factors in split flapper check valve design, it can be important to minimize the distance between the hinge pin and the cross bar, leaving little room for making the bushing flanges larger.

### BRIEF SUMMARY

In one embodiment, a check valve assembly includes a valve body, a hinge pin, a plurality of flappers, and a grounded lug. The valve body includes an inner surface that defines a flow passage. The hinge pin is coupled to the valve body and extends across the flow passage. The flappers are rotationally mounted on the hinge pin, and the grounded lug is non-rotationally coupled to the hinge pin and is disposed between two of the flappers.

In another embodiment, a check valve assembly includes a valve body, a plurality of flappers, a plurality of lug bushings, a hinge pin, and a grounded lug. The valve body includes an inner surface that defines a flow passage. The flappers are rotationally mounted within the flow passage. Each flapper comprises a plurality of lugs, each having an opening therein, and each opening has two ends. Each lug bushing extends into one of the ends of a different one of the lugs. The hinge pin is coupled to the valve body and extends through the each of the lug bushings to thereby rotationally mount the flappers within the flow passage. The grounded lug is non-rotationally coupled to the hinge pin and is disposed between two of the flappers.

In yet another embodiment, a check valve assembly includes a valve body, a plurality of flappers, a plurality of lug bushings, a hinge pin, an open stop, a valve seat, a cross bar, and a grounded lug. The valve body includes an inner surface that defines a flow passage. The flappers are rotationally mounted within the flow passage and are rotatable between a closed position and a full-open position. Each flapper includes a plurality of lugs, each lug has an opening therein, and each opening having two ends. Each lug bushing extends into one of the ends of a different one of the lugs. The hinge pin is coupled to the valve body and extends through the each of the lug bushings to thereby rotationally mount the flappers within the flow passage. The open stop assembly is coupled to the valve body and extends across the flow passage. The valve seat is formed on the inner surface of the valve body. The cross bar extends across the flow passage. The grounded lug is non-rotationally coupled to the hinge pin and is disposed between two of the flappers. The flappers each engage the open stop assembly when the flappers are in the full-open position, and the flappers each engage the valve seat and cross bar when the flappers are in the closed position.

### BRIEF DESCRIPTION OF THE DRAWINGS

The present invention will hereinafter be described in conjunction with the following drawing figures, wherein like numerals denote like elements, and wherein:

FIG. 1 depicts an exploded view of a check valve assembly;

FIG. 2 depicts a schematic cross section view of the check valve assembly of FIG. 1; and

FIG. 3 depicts a plan view of a portion of the check valve assembly of FIG. 1.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

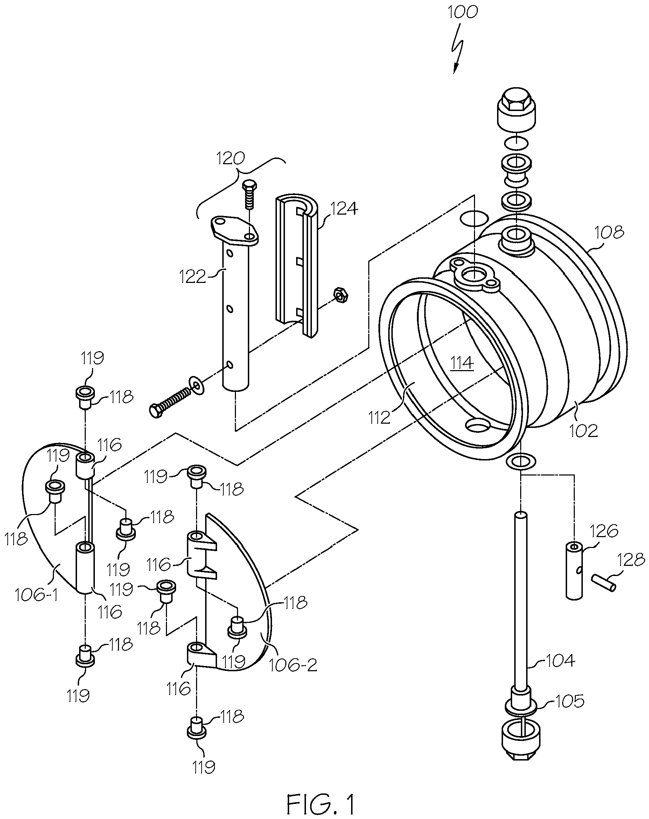

Referring to FIG. 1, an exploded plan view of an embodiment of a split flapper check valve assembly 100 is depicted, and includes a valve body 102, a hinge pin 104, and a pair of flappers 106 (e.g., 106-1, 106-2). The valve body includes an inlet port 108, an outlet port 112, and an inner surface 113 that defines a flow passage 114 between the inlet and outlet ports 108, 112.

The hinge pin (or shaft) 104 is mounted on the valve body 102 and extends across the flow passage 114. The depicted hinge pin 104 is mounted on the valve body via suitable mounting hardware, and is secured via threaded bolts that thread onto like-threaded protrusions on the valve body 102. The depicted hinge pin 104 is adjustably coupled to the valve body 102. More specifically, the depicted hinge pin 104 includes a flange 105 that allows the axial endplay thereof to be adjusted.

The flappers 106 are each rotationally mounted on the hinge pin 104 via a plurality of lugs 116 that are formed on each flapper 106. In the depicted embodiment, each flapper includes a relatively long lug and a relatively short lug, though this need not be the case. The hinge pin 104 extends into and through each of the lugs 116. A pair of lug bushings 118 is also associated with each of the lugs 116. A lug bushing 118 extends into each end of each of the lugs 116, and the hinge pin 104 extends through each lug bushing 118. Thus, the lug bushings 118 act as bearing surfaces as well. Moreover, the lug bushings 118 are each configured with a load flange 119.

The depicted valve assembly 100 additionally includes an open stop assembly 120. The open stop assembly 120 is coupled to the valve body 102 and extends across the flow passage 114 downstream of the flappers 106. The depicted open stop assembly 120 includes a main body 122 and a soft stop device 124. The soft stop device 124 is coupled to the main body 122, and provides a relatively flexible surface against which the flappers 106 may seat when in the open position.

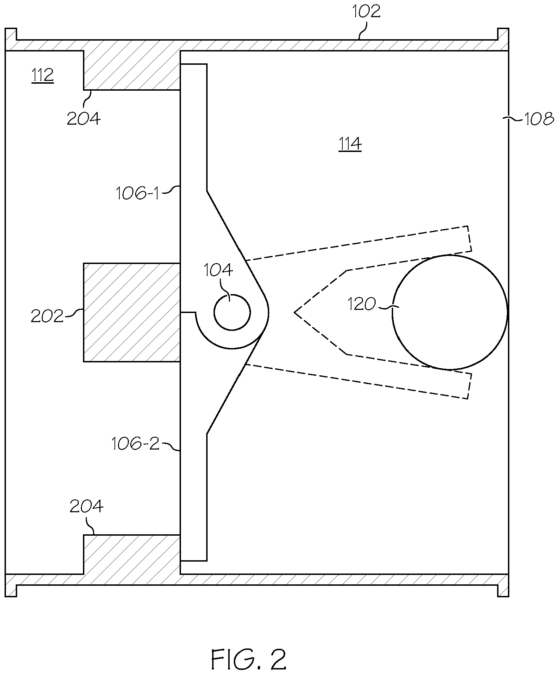

With reference now to FIG. 2, the valve body 102 additionally includes a cross bar 202. The cross bar 202, which is not visible in FIG. 1, may be formed as an integral part of the valve body 102, or formed separately and coupled thereto. In either case, the cross bar 202 extends across the flow passage 114. In addition to the one or more valve seats 204, which are also depicted in FIG. 2 (and not visible in FIG. 1), the flappers 106 rest on, and transfer load to, the cross bar 202 when the flappers 106 are in the closed position (which is the position depicted in FIG. 2). Using dotted lines, FIG. 2 also depicts more clearly how the flappers 106 contact the open stop assembly 120 when in the open position.

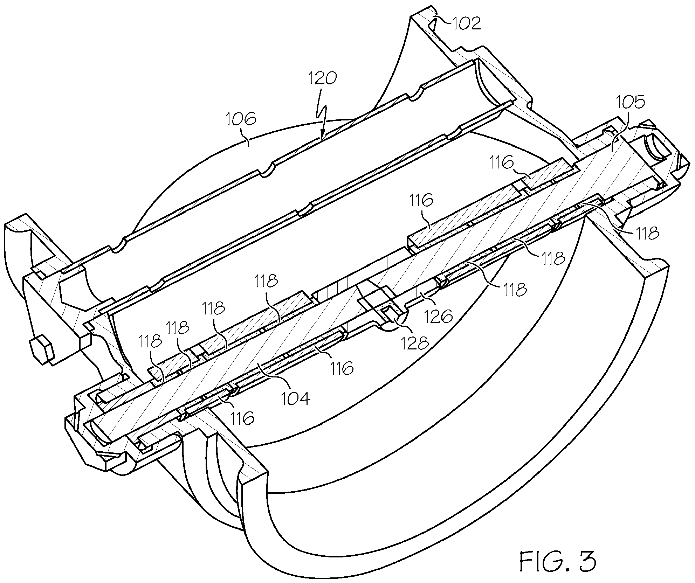

Turning now to FIG. 3, it may be seen that when the flappers 106 are properly mounted on the hinge pin 104, the lugs 116 of each flapper 106 are interlaced. Thus, as both FIGS. 1 and 3 depict, another bushing, which is referred to herein as a grounded bushing 126, is mounted on the hinge pin 104 and is disposed between each flapper 106. Although the depicted valve assembly 100 is implemented with only one grounded bushing 126, it will be appreciated that in other embodiments, two or more grounded bushings 126 could be used. The grounded bushing 126 is non-rotationally coupled to the hinge pin 104, and is thus "grounded" to the hinge pin 104. The grounded bushing 126 may be non-rotationally coupled to the hinge pin 104 using any one of numerous techniques, but in the depicted embodiment it is non-rotationally coupled via a tapered set screw 128 (or other suitable fastener). Some non-limiting alternative techniques include bolting, welding, and clamping, just to name a few. If a fastener is used, the grounded bushing 126 may be selectively releasable from the hinge pin 104.

The one or more grounded bushings 126 provide additional surface area for controlling the axial positions of the flappers 106 along the hinge pin 104. The flappers 106 bear against the ends of the grounded bushing(s) 126. The additional bearing surface area effectively increases the overall axial bearing surface area according to the number of additional grounded lugs that are used, without increasing the diameter of the flapper lugs 116.

Because grounded bushing 126 is fixedly coupled to the hinge pin 104, and because the hinge pin 104 is fixed with respect to the valve body 102, the overall effect is that there are now plural bearing surfaces (two in the depicted embodiment) that accept loads from the flappers 106, rather than just one. The lug bushings 118 with load flanges 119 on both ends of each flapper lug 116, the grounded bushing 126 fixedly secured between the flappers 106, and the ability to adjust the axial endplay of the hinge pin 104 ensures a close fit between the flanges 119 of the lug bushings 118 and the grounded bushing 126 will be maintained.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A check valve assembly, comprising:
a valve body including an inner surface that defines a flow passage;
a hinge pin coupled to the valve body and extending across the flow passage;
a plurality of flappers rotationally mounted on the hinge pin; and
a grounded lug non-rotationally coupled to the hinge pin and disposed between two of the flappers.

2. The check valve assembly of Claim 1, wherein the grounded lug is non-rotationally coupled to, and selectively releasable from, the hinge pin.

3. The check valve assembly of Claim 2, wherein the grounded lug comprises:
a threaded fastener opening; and
a threaded fastener extending into the threaded fastener opening and engaging the hinge pin.

4. The check valve assembly of Claim 1, wherein the hinge pin is adjustably coupled to the valve body.

5. The check valve assembly of Claim 1, wherein:
each flapper comprises a plurality of lugs, each lug having an opening therein; and
the hinge pin extends through the opening in each of the lugs to thereby rotationally mount the flappers thereon.

6. The check valve assembly of Claim 5, wherein:
the opening in each lug has two opposing ends; and
the check valve assembly further comprises a plurality of lug bushings, each lug bushing rotationally mounted on the hinge pin and extending into one of the ends of a different one of the lugs.

7. The check valve assembly of Claim 6, wherein each lug bushing includes a load flange extending radially therefrom and engaging an end of the opening.

8. The check valve assembly of Claim 1, wherein the flappers are rotatable between a closed position and a full-open position.

9. The check valve assembly of Claim 8, further comprising:
an open stop assembly coupled to the valve body and extending across the flow passage, the open stop assembly disposed to be engaged by the flappers when the flappers are in the full-open position.

10. The check valve assembly of Claim 8, further comprising:
a valve seat formed on the inner surface of the valve body; and
a cross bar extending across the flow passage,
wherein the flappers each engage the valve seat and cross bar when the flappers are in the closed position.
